(19) **Europäisches Patentamt**
**European Patent Office**
**Office européen des brevets**

(11) **EP 4 318 984 A1**

(12) **EUROPEAN PATENT APPLICATION**
published in accordance with Art. 153(4) EPC

(43) Date of publication:
**07.02.2024 Bulletin 2024/06**

(21) Application number: **22779085.4**

(22) Date of filing: **31.03.2022**

(51) International Patent Classification (IPC):
**H04B 17/327** (2015.01)    **H04W 72/04** (2023.01)

(52) Cooperative Patent Classification (CPC):
**H04B 17/327; H04B 17/382; H04W 28/02;**
**H04W 72/04; H04W 72/56**

(86) International application number:
**PCT/CN2022/084509**

(87) International publication number:
**WO 2022/206905 (06.10.2022 Gazette 2022/40)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **01.04.2021 CN 202110357794**

(71) Applicant: **Vivo Mobile Communication Co., Ltd.**
**Dongguan, Guangdong 523863 (CN)**

(72) Inventors:
• **WANG, Huan**
**Dongguan, Guangdong 523863 (CN)**
• **JI, Zichao**
**Dongguan, Guangdong 523863 (CN)**

(74) Representative: **Conti, Marco**
**Bugnion S.p.A.**
**Via di Corticella, 87**
**40128 Bologna (IT)**

(54) **SIDELINK RESOURCE RECOMMENDATION METHOD AND APPARATUS, DEVICE, AND READABLE STORAGE MEDIUM**

(57)    This disclosure discloses a sidelink resource recommendation method and apparatus, a device, and a readable storage medium, and pertains to the field of communication technologies. The sidelink resource recommendation method according to embodiments of this disclosure includes: selecting, by a first terminal, a sidelink resource. The sidelink resource includes one or more of the following: a first resource and a second resource. The second resource is used for the first terminal to transmit first information to the second terminal. The first information is used for the first terminal to recommend the first resource to the second terminal.

201

A first terminal selects a sidelink resource, the sidelink resource including one or more of the following: a first resource and a second resource; where the second resource is used for the first terminal to transmit first information to a second terminal, where the first information is used for the first terminal to recommend the first resource to the second terminal

FIG. 2

EP 4 318 984 A1

## Description

## CROSS-REFERENCE TO RELATED APPLICATIONS

This application claims priority to Chinese Patent Application No. 202110357794.7, filed in China on April 01, 2021, which is incorporated herein by reference in its entirety.

## TECHNICAL FIELD

This disclosure pertains to the field of communication technologies and specifically relates to a sidelink resource recommendation method and apparatus, a device, and a readable storage medium.

## BACKGROUND

New radio (New Radio, NR) sidelink (Sidelink, SL) resources are allocated in two modes: one based on scheduling by base station (mode 1), and the other based on autonomous resource selection by terminal (for example, user equipment (User Equipment, UE)) (mode 2). In the resource allocation mode based on scheduling by base station, sidelink resources for use by UE for data transport is determined by a base station, and notified to receive (receive, RX) UE by using downlink signaling. In the resource allocation mode based on autonomous selection by UE, UE selects available transport resources from a (pre)configured resource pool; and before the resource selection, the UE performs channel monitoring, selects a set of resources with less interference based on channel monitoring results, and then randomly selects, from the resource set, a resource for transport.

For an enhanced scheme for sidelink resource selection, for example, it may be considered that the RX UE recommends a resource to transmit (transmit, TX) UE, and the TX UE uses the recommended resource for transport; or coordination UE (coordination UE, Co-UE) recommends a resource to the TX UE, and the TX UE uses the recommended resource for transport. The Co-UE may also act as RX UE, or the RX UE may also act as Co-UE.

However, these related resource selection methods consider only the transport requirements on RX UE (or Co-UE) side, impacting the reliability of transport by TX UE on a recommended resource.

## SUMMARY

Embodiments of this disclosure provide a sidelink resource recommendation method and apparatus, a device, and a readable storage medium, so as to solve the problem of how transport reliability can be improved.

According to a first aspect, a sidelink resource recommendation method is provided, including:

selecting, by a first terminal, a sidelink resource, the sidelink resource including one or more of the following: a first resource and a second resource; where

the first resource is for the first terminal to recommend to a second terminal; and

the second resource is used for the first terminal to transmit first information to the second terminal, where the first information is used for the first terminal to recommend the first resource to the second terminal.

According to a fifth aspect, a terminal is provided, including a processor, a memory, and a program stored in the memory and capable of running on the processor, where when the program is executed by the processor, the step of the method according to the first aspect is implemented.

According to a sixth aspect, a terminal is provided, including a processor and a communication interface, where the processor is configured to perform the step of the method according to the first aspect.

According to a ninth aspect, a readable storage medium is provided, where the readable storage medium stores a program or instructions, and when the program or instructions are executed by a processor, the step of the method according to the first aspect is implemented.

According to a tenth aspect, a computer program/program product is provided, where the computer program/program product is stored in a storage medium, and the computer program/program product is executed by at least one processor so as to implement the step of the method according to the first aspect.

According to an eleventh aspect, a chip is provided, where the chip includes a processor and a communication interface, the communication interface is coupled to the processor, and the processor is configured to run a program or instructions so as to implement the method according to the first aspect.

According to a twelfth aspect, a communication device is provided and configured to perform the method according to the first aspect.

In the embodiments of this disclosure, the first terminal can recommend the first resource selected from the selected sidelink resource to the second terminal, so as to improve the reliability of use of the recommended resource by the second terminal for transport; and the first terminal can also transmit the first information for recommending the first resource to the second terminal so that the resource recommendation can be conducted between the first terminal and the second terminal in a timely manner.

## BRIEF DESCRIPTION OF DRAWINGS

FIG. 1 is a structural diagram of a wireless communication system to which the embodiments of this disclosure are applicable;

FIG. 2 is a first flowchart of a sidelink resource recommendation method according to an embodiment of this disclosure;

FIG. 3 is a second flowchart of a sidelink resource recommendation method according to an embodiment of this disclosure;

FIG. 4 is a third flowchart of a sidelink resource recommendation method according to an embodiment of this disclosure;

FIG. 5 is a schematic diagram of a sidelink resource recommendation apparatus according to an embodiment of this disclosure; and

FIG. 6 is a schematic diagram of a terminal according to an embodiment of this disclosure.

## DESCRIPTION OF EMBODIMENTS

For ease of understanding of the embodiments of this disclosure, the following technical points are first described.

I. Introduction to NR SL resource allocation/selection:

NR SL resources are allocated in two modes: one based on scheduling by base station (mode 1 (mode 1)), and the other based on autonomous resource selection by UE (mode 2 (mode 2)). In the resource allocation mode based on scheduling by base station, sidelink resources for use by UE for data transport is determined by a base station, and notified to TX UE by using downlink signaling. In the resource allocation mode based on autonomous selection by UE, UE selects available transport resources from a (pre)configured resource pool; and before the resource selection, the UE performs channel monitoring, selects a set of resources with less interference based on channel monitoring results, and then randomly selects, from the resource set, a resource for transport.

In mode 2, a specific workflow is as follows.

(1) After resource selection is triggered, TX UE first determines a resource selection window. A lower boundary of the resource selection window is at a time T1 after triggering of the resource selection, and an upper boundary of the resource selection is at a time T2 after triggering of the resource selection, where T1 is selected within a range of [T1_min, T1_max] by using the UE implementation, T2 is a value selected within a packet delay budget (packet delay budget, PDB) for transport of transport block (Transport Block, TB) by using the UE implementation, and T2 is not earlier than T1.

(2) Before resource selection, the UE needs to determine a candidate resource set (candidate resource set) for the resource selection, where the number of candidate resources (for example, sub-channels (sub-channel)) is determined by a media access control (Media Access Control, MAC) layer. The UE performs comparison between a measured value of reference signal received power (Reference Signal Received Power, RSRP) estimated on a resource within the resource selection window (for example, estimated by monitoring a physical sidelink control channel (physical sidelink control channel, PSCCH)/physical sidelink shared channel (physical sidelink shared channel, PSSCH)) and a corresponding RSRP threshold (threshold). If the RSRP is greater than the RSRP threshold, such resource is excluded and cannot be added to the candidate resource set. After resource exclusion is performed, remaining resources in the resource selection window form the candidate resource set. The resources in the candidate resource set account for no less than x% of the resources in the resource selection window. If less than x%, the RSRP threshold needs to be increased based on a step value (3dB), and then the resource exclusion operation is performed until no less than x% of the resources can be selected. In addition, the RSRP comparison is related to a priority (priority) of a to-be-transported TB and a priority value demodulated on a PSCCH, and a specific process is not described herein.

(3) After the candidate resource set is determined, the UE randomly selects transport resources from the candidate resource set, where the number of resources to be selected is determined based on the decision of the MAC layer.

Steps (1) and (2) are performed at a physical layer, and step (3) is performed at a higher level (the MAC layer). In addition, the UE may reserve transport resources for a next transport during a current transport.

II. Introduction to sidelink resource reservation/indication:

In NR SL, TX UE performs resource reservation/indication (reservation includes periodic reservation and aperiodic reservation) for resources allocated to it, and a reserved resource is to be used for subsequent PSCCH/PSSCH transport.

The aperiodic reservation/indication may be implemented by using a time domain resource assignment (Time domain resource assignment) field in sidelink control information (Sidelink Control Information, SCI) (resources of at least 1 to 32 slots are indicated), and the reserved resource may be used at least for transport of a same TB.

The periodic reservation/indication may be implemented by using a resource reservation period (Resource reservation period) field in the SCI, and a periodic resource reserved in a current period may be used for transport of a next TB. Here, a frequency domain resource that appears periodically may be referred to as a periodic resource of that resource.

**III. Introduction to SL resource preemption (Resource pre-emption):**

In the resource allocation mode 2, a resource preemption mechanism is supported. The mechanism is briefly described as follows. In a case that a resource that has been reserved/selected by one UE overlaps (partially overlaps) a resource reserved/selected by another UE with a higher-priority service, when a measured SL-RSRP value of the UE on related resources is greater than an associated (associated) SL-RSRP threshold, the UE triggers resource re-selection. The service priority and the SL-RSRP threshold are determined based on a TB transported on the resource.

**IV. Introduction to SL resource re-evaluation (Resource re-evaluation):**

In the resource allocation mode 2, a resource re-evaluation mechanism is supported. The mechanism is briefly described as follows. At least for a resource that has been selected but not reserved by UE (other forms of resources are not excluded and are not described herein for brevity), if the resource overlaps (partially overlaps) a resource reserved/selected by another UE, when a measured SL-RSRP value of the UE on related resources is greater than an associated SL-RSRP threshold, the UE triggers resource re-selection.

**V. Introduction to hybrid automatic repeat request (Hybrid Automatic Repeat reQuest, HARQ) round trip time (Round-Trip Time, RTT) limitation for SL:**

At least for mode 2, to ensure that PSSCH repetition resources are present after TX UE demodulates feedback information, it is specified that a time interval between any two of PSSCH transport resources that are selected needs to be greater than HARQ RTT, so as to guarantee efficiency and reliability of transport.

**VI. Introduction to enhanced scheme for NR sidelink resource allocation/selection:**

Terminal A (UE-A) determines a resource set and notifies Terminal B (UE-B) of the resource set, and UE-B may consider the resource set notified by UE-A during resource selection in the mode 2.

**VII. Introduction to uplink (Uplink, UL)/SL prioritization (prioritization):**

SL transmission/reception may collide with UL transmission. In some application scenarios, in case of a collision, the lower-priority party (SL/UL) has to execute a discarding/power reduction operation. In this regard, to determine the priority between SL transmission/reception and UL transmission, a priority comparison rule is defined based on a standard, in which the final priority between SL transmission/reception and UL transmission is determined based on SL priority index (priority index) and/or UL priority index.

The following clearly describes the technical solutions in the embodiments of this disclosure with reference to the accompanying drawings in the embodiments of this disclosure. Apparently, the described embodiments are some rather than all of the embodiments of this disclosure. All other embodiments obtained by persons of ordinary skill in the art based on the embodiments of this disclosure shall fall within the protection scope of this disclosure.

The terms "first", "second", and the like in the specification and claims of this disclosure are used to distinguish between similar objects rather than to describe a specific order or sequence. It should be understood that the terms used in this way are interchangeable in appropriate circumstances such that the embodiments of this disclosure can be implemented in an order other than the those illustrated or described herein. In addition, "first" and "second" are typically used to distinguish objects of a same type and do not limit a quantity of the objects. For example, there may be one or more first objects. In addition, "and/or" in the specification and claims represents at least one of connected objects, and the character "/" generally indicates that the contextually associated objects have an "or" relationship.

It should be noted that technologies described in the embodiments of this disclosure are not limited to a long term evolution (Long Term Evolution, LTE) or LTE-Advanced (LTE-Advanced, LTE-A) system, and may also be applied to other wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this disclosure are often used interchangeably, and the technology described herein may be used in the above-mentioned systems and radio technologies as well as other systems and radio technologies. In the following descriptions, a new radio (New Radio, NR) system is described for illustration purposes, and NR terms are used in most of the following descriptions, although these technologies may also be applied to other applications than the NR system application, for example, the 6th generation (6th Generation, 6G) communication system.

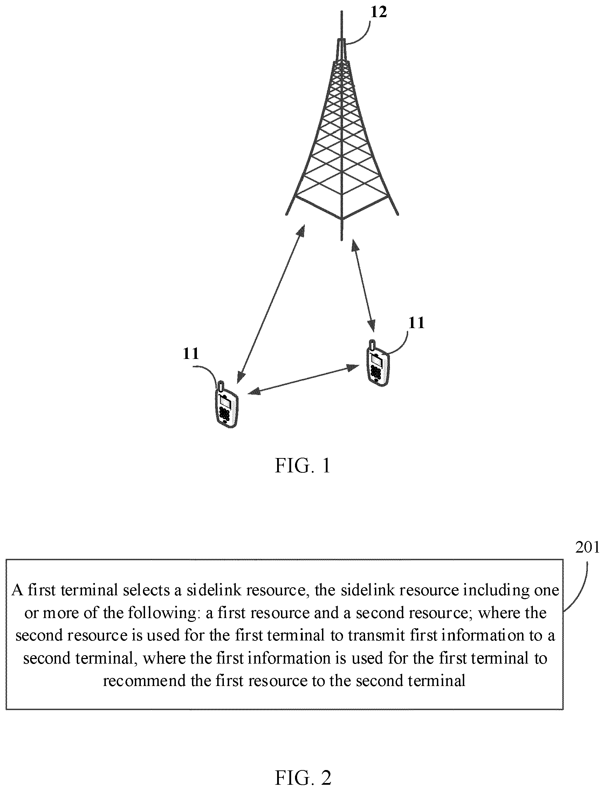

Referring to FIG. 1, FIG. 1 is a structural diagram of a wireless communication system to which the embodiments of this disclosure are applicable. The wireless communication system includes a terminal 11 and a network-side device 12. The terminal 11 may also be referred to as a terminal device or user equipment (User Equipment, UE). The terminal 11 may be a terminal-side device, such as a mobile phone, a tablet personal computer (Tablet Personal Computer), a laptop computer (Laptop Computer) or notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), a wearable device (Wearable Device), vehicular user equipment (VUE), or pedestrian user equipment (PUE). The wearable device includes a smart watch, a wrist band, earphones, glasses, or the like. It should be noted that a specific type of the terminal 11 is not limited in the embodiments of this disclosure.

The network-side device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a Node B, an evolved node B (eNB), a home NodeB, a home evolved NodeB, a WLAN access point, a Wi-Fi node, a transmission reception point (Transmitting Receiving Point, TRP), a radio access network node, or other appropriate terms in the art. Provided that the same technical effects are achieved, the base station is not limited to any specified technical term. It should be noted that in the embodiments of this disclosure, only the base station in the NR system is used as an example, although the specific type of the base station is not limited.

The following describes in detail a sidelink resource recommendation method and apparatus, a device, and a readable storage medium provided in the embodiments of this disclosure through some embodiments and application scenarios thereof with reference to the accompanying drawings.

Referring to FIG. 2, this disclosure provides a sidelink resource recommendation method. The method may be executed by a first terminal. Specific steps include step 201.

Step 201. The first terminal selects a sidelink resource, the sidelink resource including one or more of the following: a first resource and a second resource; where

the second resource is used for the first terminal to transmit first information to a second terminal, where the first information is used for the first terminal to recommend the first resource to the second terminal. Recommending the first resource may also be interpreted as allocating or scheduling the first resource.

The sidelink resource may also be referred to as a transport resource.

The first terminal may also be referred to as Co-UE, and the second terminal may also be referred to as Tx UE.

The first information may also be referred to as resource recommendation signaling, the first resource may also be referred to as a recommended resource for the second terminal to transport a to-be-transported TB, and the second resource may also be referred to as a resource recommendation signaling transport resource.

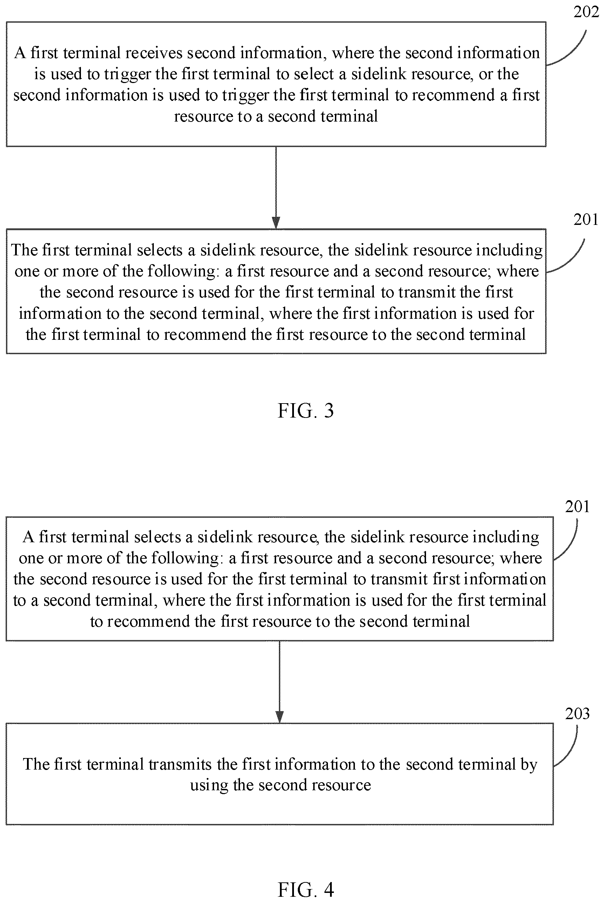

In an implementation of this disclosure, referring to FIG. 3, before step 201, the method further includes step 202.

Step 202. The first terminal receives second information, where the second information is used to trigger the first terminal to select the sidelink resource, or the second information is used to trigger the first terminal to recommend the first resource to the second terminal.

The second information may also be referred to as trigger signaling.

In an implementation of this disclosure, referring to FIG. 4, after step 201, the method further includes step 203.

Step 203. The first terminal transmits the first information to the second terminal by using the second resource.

In an implementation of this disclosure, the step that the first terminal selects a sidelink resource includes the following step.

The first terminal selects the sidelink resource from a third resource, where the third resource is a resource with interference lower than a threshold.

The third resource may also be referred to as a low-interference resource.

It should be noted that in a case that the selection procedures of the first resource and the second resource are different resource selection procedures, the first terminal selects the first resource from a first type of third resource, and the first terminal selects the second resource from a second type of third resource, that is, in this scenario, there are two types of third resources.

In a case that the selection procedures of the first resource and the second resource are identical resource selection procedures, the first terminal selects the first resource and the second resource from one type of third resource, that is, in this scenario, there is one type of third resource.

In an implementation of this disclosure, before the step that the first terminal selects the sidelink resource from a third resource, the method further includes the following step.

The first terminal determines (or identifies) the third resource.

In an implementation of this disclosure, the step that the first terminal determines the third resource includes the following step.

The first terminal determines the third resource in a first resource selection window.

For example, the first terminal identifies X% of third resource (or low-interference resource) within the resource selection window according to a resource selection procedure of mode 2.

In an implementation of this disclosure, the step that the first terminal determines the third resource in a first resource selection window includes the following step.

The first terminal determines the third resource in the first resource selection window based on protocol-prescribed information, control node-configured information, or preconfigured information.

For example, if there exists only a mode in which the first terminal schedules the second terminal, the first terminal does not need to determine (or identify) the third resource.

The control node may include a network side device, a base station, a head node, UE, RX UE, or relay (Relay) UE.

In an implementation of this disclosure, the step that the first terminal selects the sidelink resource from a third resource includes the following steps: the first terminal determines a second resource selection window; and the first terminal selects the sidelink resource from the third resource (or a low-interference resource) in the second resource selection window.

In an implementation of this disclosure, the first terminal selects the sidelink resource based on one or more of the following: (1) a first time, (2) a PDB (for example, a remaining (remaining) PDB), (3) priority (Priority) information, (4) the number of sub-channels (sub-channel), and (5) the number of repetitions; where the first time is a trigger time (or referred to as a trigger time point) for selecting the sidelink resource by the first terminal.

It can be understood that the first time may also be the time at which the first terminal receives the second information, or the sum of the time at which the first terminal receives the second information and an offset, or a time autonomously determined by the first terminal.

In an implementation of this disclosure, the first terminal selects the sidelink resource based on a second time; where
the second time includes at least one or more of the following:

(1) a processing time for second information;
(2) a processing time for selection of the first resource;
(3) a transport preparation time for the first information;
(4) a transport time for the first information;
(5) a demodulation time for the first information; and
(6) a transport preparation time for the second terminal.

In an implementation of this disclosure, the first terminal determines the third resource based on one or more of the following: (1) a third time, (2) a PDB (for example, a remaining (remaining) PDB), (3) priority (Priority) information, (4) the number of sub-channels (sub-channel), and (5) the number of repetitions; where the third time is a trigger time (or referred to as a trigger time point) for selecting the sidelink resource by the first terminal.

It can be understood that the third time may also be the time at which the first terminal receives the second information, or the sum of the time at which the first terminal receives the second information and an offset, or a time autonomously determined by the first terminal.

In an implementation of this disclosure, the first terminal determines the third resource based on a fourth time; where
the fourth time includes at least one or more of the following:

(1) a processing time for second information;
(2) a processing time for selection of the first resource;
(3) a transport preparation time for the first information;
(4) a transport time for the first information;
(5) a demodulation time for the first information; and
(6) a transport preparation time for the second terminal.

In an implementation of this disclosure, the packet delay budget is a packet delay budget prescribed by a protocol, configured or preconfigured by a control node, dynamically indicated by a control node, negotiated between terminals (for example, between Co-UE and TX UE), or pertaining to a TB to be transported by the second terminal.

In an implementation of this disclosure, the priority information is priority information prescribed by a protocol, configured or preconfigured by a control node, dynamically indicated by a control node, negotiated between terminals (for example, between Co-UE and TX UE), or pertaining to a TB to be transported by the second terminal.

In an implementation of this disclosure, the number of sub-channels is the number of sub-channels prescribed by a protocol, configured or preconfigured by a control node, dynamically indicated by a control node, negotiated between terminals (for example, between Co-UE and TX UE), or pertaining to a TB to be transported by the second terminal.

In an implementation of this disclosure, the number of repetitions is the number of repetitions prescribed by a protocol, configured or preconfigured by a control node, dynamically indicated by a control node, negotiated between terminals (for example, between Co-UE and TX UE), or pertaining to a TB to be transported by the second terminal.

In an implementation of this disclosure, a priority of the first information is further used for priority comparison between transmission or reception of the first information and another transport; where the another transport includes at least one of NR SL transmission, NR SL reception, NR uplink (UpLink, UL) transmission, evolved universal terrestrial radio access (Evolved Universal Terrestrial Radio Access, EUTRA) SL transmission, and EUTRA SL reception.

It should be noted that on the first terminal (for example, Co-UE) side, the priority information of the first information (equivalent to resource recommendation signaling) may be used for UL/SL prioritization (prioritization) between transmission of the first information (equivalent to resource recommendation signaling) and UL transmission, or may be used for UL/SL prioritization between reception of HARQ feedback corresponding to the first information (equivalent to resource recommendation signaling) and UL transmission.

In addition, on the second terminal (for example, TX UE) side, the priority information of the first information (equivalent to resource recommendation signaling) may be used for UL/SL prioritization between reception of the first information (equivalent to resource recommendation signaling) and UL transmission, or may be used for UL/SL prioritization between transmission of HARQ feedback corresponding to the first information (equivalent to resource recommendation signaling) and UL transmission.

It should be noted that different priority determining manners may be used for reception and transmission of the first information (equivalent to resource recommendation signaling).

In an implementation of this disclosure, the step that the first terminal selects a sidelink resource includes the following step.

The first terminal selects the sidelink resource based on a resource selection mechanism; where the resource selection mechanism includes one or more of the following:

(1) a first mechanism, where the first mechanism includes that a first resource selection procedure is used for the first resource and that a second resource selection procedure is used for the second resource; and
(2) a second mechanism, where the second mechanism includes that a third resource selection window (or referred to as a resource selection window for a recommended resource) is used for the first resource and that a fourth resource selection window (or referred to as a selection window for resource recommendation signaling) is used for the second resource.

In an implementation of this disclosure, the resource selection mechanism is prescribed by a protocol, or configured or preconfigured by a control node.

In an implementation of this disclosure, the first resource selection procedure and the second resource selection procedure satisfy one of the following conditions.

(1) The first resource selection procedure and the second resource selection procedure are executed separately. To be specific, the first resource selection procedure and the second resource selection procedure are independent of each other. For example, the first resource selection procedure is executed before the second resource selection procedure; or the second resource selection procedure is executed before the first resource selection procedure; or the first resource selection procedure and the second resource selection procedure are executed at the same time, to be specific, the first resource and the second resource are selected in an unspecified order.

Optionally, the first resource selection procedure or the second resource selection procedure includes at least one of a physical layer resource selection procedure and a MAC layer resource selection procedure.

For example, the physical layer processes for resource selection of the first resource and the second resource are independent of each other, and the MAC layer selects the final transport resource with at least a preset relationship (for example, a timing relationship/time interval constraint) guaranteed between the first resource and the second resource.

(2) The first resource selection procedure and the second resource selection procedure share one resource selection procedure. To be specific, the first resource selection procedure and the second resource selection procedure are interdependent.

The resource selection procedure includes at least one of a physical layer resource selection procedure and a MAC layer resource selection procedure. In an implementation of this disclosure, that the first resource selection procedure and the second resource selection procedure are executed separately includes at least one or more of the following:

(1) the second resource selection procedure is triggered based on a position of the first resource selected in the first resource selection procedure;
(2) the first resource selection procedure is triggered based on a position of the second resource selected in the second resource selection procedure;
(3) the second resource is selected based on the position of the first resource selected in the first resource selection procedure; and
(4) the first resource is selected based on the position of the second resource selected in the second resource selection procedure.

For example, for the case that the resource selection procedures of the first resource and the second resource are interdependent:

one of the resource selection procedures of the first resource and the second resource (including the physical layer and the MAC layer) is first executed, and then the MAC layer selects one of the resources before triggering selection of the other resource; or alternatively, one of the resource selection procedures of the first resource and the second resource (including the physical layer and the MAC layer) is first executed, then after selecting one of the resources, the MAC layer notifies the physical layer of the selected first resource and second resource, and then the physical layer and the MAC layer execute the other procedure based on the notified resource position.

In an implementation of this disclosure, the method further includes:

in a case that selection of the first resource fails in the first resource selection procedure, terminating, by the first terminal, the first resource selection procedure, or discarding a selected resource; or

in a case that selection of the second resource fails in the second resource selection procedure, terminating, by the first terminal, the second resource selection procedure, or discarding a selected resource.

In other words, for any of the resource selection mechanisms, if the selection of either the first resource or the second resource fails (for example, no suitable resource is selected), Co-UE terminates the resource selection procedure/discards the selected first resource or second resource.

In an implementation of this disclosure, the third resource selection window and the fourth resource selection window are prescribed by a protocol, or configured or preconfigured by a control node.

Optionally, a manner of determining the selection windows for the first resource and the second resource is prescribed by a protocol, or configured or preconfigured by a control node to match the selection mechanism.

In an implementation of this disclosure, the third resource selection window and the fourth resource selection window satisfy one of the following.

(1) The third resource selection window and the fourth resource selection window are different resource selection windows.

Optionally, the fourth resource selection window is determined based on a position of the first resource selected in the third resource selection window, or the third resource selection window is determined based on a position of the second resource selected in the fourth resource selection window.

For example, the third resource selection window is determined first, and then the fourth resource selection window is determined based on the position of the selected first resource; or the fourth resource selection window is determined first, and then the third resource selection window is determined based on the position of the selected second resource; or the third resource selection window and the fourth resource selection window are determined in an unspecified order.

(2) The third resource selection window and the fourth resource selection window share one resource selection window.

In an implementation of this disclosure, a time interval between the first resource and the second resource is determined based on one or more of the following:

(1) a sum of a transport time for the first information and a time for demodulating the first information by the second terminal;

(2) a sum of the transport time for the first information and a transport preparation time for the second terminal;

(3) a sum of the transport time for the first information, the time for demodulating the first information by the second terminal, and the transport preparation time for the second terminal;

(4) protocol prescription, control node configuration or preconfiguration, or negotiation between terminals,

for example, a minimum time interval between the first resource and the second resource is notified to Co-UE by TX UE, for example, in the form of TX UE capability (capability) notification; and

(5) the first information being capable of indicating the first resource.

It should be noted that the time interval between the first resource and the second resource needs to ensure that the first information is capable of indicating the selected first resource. The time interval between the first resource and the second resource may be an interval between the last second resource and the 1st first resource; or the time interval between the first resource and the second resource may be a time interval between N time units after a position of successful transport of the first information (for example, reception of an ACK) and the 1st first resource.

In an implementation of this disclosure, the first information includes one or more of the following:

(1) position(s) of one or more start sub-channels;
(2) one or more time domain resource assignment (Time domain resource assignment, TDRA) fields or frequency domain resource assignment (Frequency domain resource assignment, FDRA) fields, each TDRA field or FDRA field corresponding to a position of one start sub-channel;
(3) position(s) of one or more start slots;
(4) a time interval between the first information and the start slot;
(5) a time interval between multiple start slots;
(6) an absolute time of the start slot;

(7) a reference system frame number (system frame number, SFN) of the start slot; and

(8) a time offset of the start slot.

In the embodiments of this disclosure, the first terminal can recommend the first resource in the selected sidelink resource to the second terminal, so as to improve the reliability of use of the recommended resource by the second terminal for transport; and the first terminal can also transmit the first information for recommending the first resource to the second terminal so that the resource recommendation can be conducted between the first terminal and the second terminal in a timely manner.

The following describes the implementations of this disclosure with reference to Embodiment 1, Embodiment 2, and Embodiment 3.

For ease of understanding, in the following description, a recommended resource is equivalent to the first resource, a transport resource for resource recommendation signaling is equivalent to the second resource, resource recommendation signaling is equivalent to the first information, trigger signaling is equivalent to the second information, Co-UE is equivalent to the first terminal, and TX UE is equivalent to the second terminal.

Embodiment 1:

I. Resource selection of the recommended resource includes one or more of the following:

(1) Identifying low-interference resources/selecting resources based on a PDB.

Optionally, the PDB may start from a time at which trigger signaling is received.

Optionally, the PDB is a PDB prescribed by a protocol, configured or dynamically indicated by a control node, preconfigured by a control node, negotiated between UEs (between TX UE and Co-UE), or pertaining to a TB to be transported by TX UE.

Optionally, the control node includes a network node, a base station, head node UE, RX UE, and relay UE.

(2) Identifying low-interference resources/selecting resources based on priority information.

Optionally, the priority information is priority information prescribed by a protocol, configured or dynamically indicated by a control node, preconfigured by a control node, negotiated between UEs (between TX UE and Co-UE), or pertaining to a TB to be transported on a TX UE side.

(3) Identifying low-interference resources/selecting resources based on the number of sub-channels.

Optionally, the number of sub-channels is the number of sub-channels prescribed by a protocol, configured or dynamically indicated by a control node, preconfigured by a control node, negotiated between UEs (between TX UE and Co-UE), or pertaining to a TB to be transported on a TX UE side.

(4) Identifying low-interference resources/selecting resources based on the number of repetitions.

Optionally, the number of repetitions is the number of repetitions prescribed by a protocol, configured or dynamically indicated by a control node, preconfigured by a control node, negotiated between UEs (between TX UE and Co-UE), or pertaining to a TB to be transported on a TX UE side.

II. Transport resource selection for resource recommendation signaling includes one or more of the following:

(1) Identifying low-interference resources/selecting resources based on a PDB.

Optionally, the PDB may start from a time at which trigger signaling is received.

Optionally, the PDB is a PDB prescribed by a protocol, configured or dynamically indicated by a control node, preconfigured by a control node, or negotiated between UEs (between TX UE and Co-UE).

Optionally, the PDB is related to a PDB of a to-be-transported TB or a PDB for recommended resource selection. For example, it is prescribed or configured by a protocol that each PDB of a to-be-transported TB or PDB for recommended resource selection corresponds to a PDB of resource recommendation signaling.

(2) Identifying low-interference resources/selecting resources based on priority information.

Optionally, the priority information is priority information prescribed by a protocol, configured or dynamically indicated by a control node, preconfigured by a control node, negotiated between UEs (between TX UE and Co-UE), or pertaining to a TB to be transported on a TX UE side.

For example, the trigger signaling is carried by a MAC CE, and a priority of the MAC CE may be configured/preconfigured.

Optionally, if the trigger signaling multiplexes a PSCCH/PSSCH with other information, a priority of the PSCCH/PSSCH may be one of the following:

(a) a highest priority among all information priorities;

(b) a priority of the trigger signaling; and

(c) being determined based on a priority of other information than the trigger signaling.

(3) Identifying low-interference resources/selecting resources based on the number of sub-channels.

Optionally, the number of sub-channels is the number of sub-channels prescribed by a protocol, configured or dynamically indicated by a control node, preconfigured by a control node, negotiated between UEs (between TX UE and Co-UE), or pertaining to a TB to be transported on a TX UE side. For example, one sub-channel is occupied.

(4) Identifying low-interference resources/selecting resources based on the number of repetitions.

The number of repetitions is prescribed by a protocol, configured or dynamically indicated by a control node, preconfigured, or negotiated between UEs (between TX UE and Co-UE). For example, only one transport is performed.

Embodiment 2:

Co-UE identifies low-interference resources/selects transport resources based on a processing time/signaling transport time.

Optionally, the processing time/signaling transport time includes at least one or more of the following constraints for limiting the processing time/signaling transport time to a maximum value, a minimum value, a fixed value, or a true value:

(1) A processing time N0 for trigger signaling.
For example, N0 may be limited by a first processing time ( $T_{proc,0}^{SL}$ ).
(2) A processing time N1 for recommended resource selection and/or a transport preparation time N1 for resource recommendation signaling.

Optionally, the above two types of time may be separately limited, which are the processing time N1' for recommended resource selection and the transport preparation time N1" for resource recommendation signaling.

For example, N1, N1', or N1" may be limited by a second processing time ( $T_{proc,1}^{SL}$ ).

(3) A transport time N2 for resource recommendation signaling.

For example, a value of N2 is 1 slot (slot).

(4) A demodulation time N3 for resource recommendation signaling and/or a transport preparation time N3 on a TX UE side.

Optionally, the above two types of time may be separately limited, which are the demodulation time N3' for resource recommendation signaling and the transport preparation time N3" on the TX UE side.

For example, N3' may be limited by $T_{proc,0}^{SL}$ .

For example, N3, N3', or N3" may be limited by a sum of the first processing time and the second processing time ( $T_{proc,1}^{SL} + T_{proc,0}^{SL}$ ).

For example, N3, N3', or N3" may alternatively be a true fixed value, depending on capabilities of the TX UE, including at least one of demodulation of resource recommendation signaling, preparation for PSCCH/PSSCH transport, switching between TX-RX/RX-TX, and the like; and such value may be notified to coordination UE.

It should be noted that a sum of any of N0, ..., and N3 is not excluded from being limited.

Embodiment 3:

(1) UE determines a resource selection window for the recommended resource: n + (X1, X2)/[X1, X2].

A resource selection trigger time point is n. If Co-UE receives trigger signaling at time point n, the recommended resource should be selected after n + N0 + N1 + N2 + N3.

(2) A specific position of X1 satisfies a constraint of X1 $\geq$/> X1_min and/or X1 $\leq$/< X1_max.

A manner of determining X1_min includes at least one or more of the following:

Option (Option) 1: X1_min is determined based on one or more (a sum there of) of N1, ..., and N3 (or corresponding maximum/minimum values).

For example, X1_min = N2 + N3 (N1, ..., and N3 may be the corresponding maximum/minimum values).

Option 2: X1_min is prescribed by a protocol.

For example, X1_min = N, and when N is 0, the manner of determining X1_min is equivalent to a manner of determining T1_min in the related art (a value of N may be prescribed by the protocol based on N1, ..., and N3, and N may be a non-zero value).

Option 3: X1_min is configured/preconfigured by a control node.

For example, X1_min = Y, where a value of Y may be prescribed/configured based on a resource selection window for resource recommendation signaling.

Option 4: X1_min is determined at least based on a position of the resource recommendation signaling, assuming that the resource position of the resource recommendation signaling is at time point y (optionally, if there are multiple pieces of corresponding resource recommendation signaling, time point y is a position of the last resource recommendation signaling).

For example, X1_min = y.

For example, Option 4 may be combined with Option 1, for example, X1_min = y + N2 + N3 (N1, ..., and N3 may be the corresponding maximum/minimum values).

For example, Option 4 may be combined with Option 2, for example, X1_min = y + N (N may be 0).

A manner of determining X1_max includes at least one or more of the following:

Option 1: X1_max is determined based on one or more (a sum there of) of any X1_min and N1, ..., and N3 (or the corresponding maximum/minimum values) from Option 1/2/3/4.

For example, X1_max = N0 + N1 + X1_min (N1, ..., and N3 may be the corresponding maximum/minimum values).

Option 2: X1_max (or X1_max - X1_min) is prescribed by a protocol.

Option 3: X1_max (or X1_max - X1_min) is configured/preconfigured by a control node.

Option 4: X1_max is determined at least based on a position of the resource recommendation signaling, assuming that the resource position of the resource recommendation signaling is at time point y (optionally, if there are multiple pieces of corresponding resource recommendation signaling, time point y is a position of the last resource recommendation signaling).

For example, a time interval between y and X1_max satisfies a preset relationship, that is, $X1\_max - y </\leq K0$, where K0 is a value prescribed/configured/preconfigured by a protocol.

In addition, X1 may also be determined in the manner of determining X1_min/X1_max.

$X2 >/\geq X1$ and/or $X2 </\leq PDB$ (the PDB is related to the recommended resource selection, and reference is made to Example 1).

(3) The UE determines a resource selection window for resource indication signaling: n + (Y1, Y2)/[Y1, Y2].

The resource selection trigger time point is n. If the Co-UE receives trigger signaling at time point n, a transport resource of resource recommendation signaling is selected after n + N0 + N1.

A specific position of Y1 satisfies a constraint of $Y1 \geq/> Y1\_min$ and/or $Y1 \leq/< Y1\_max$.

A manner of determining Y1_min/Y1_max is equivalent to the manner of determining T1_min in the related art.

$Y2 >/\geq Y1$ and/or $Y2 </\leq Y2\_max$, where a manner of determining Y2_max includes at least one or more of the following:

Option 1: Y2_max is a PDB (the PDB is related to the resource selection for the resource indication signaling, and reference is made to Example 1).

Optionally, a value of the PDB may be prescribed by a protocol/configured by a control node/preconfigured/negotiated between UEs.

Option 2: Y2_max is a value prescribed/configured/preconfigured by a protocol.

Option 3: Y2_max is determined at least based on a position of the recommended resource, assuming that the resource position of the recommended resource is at time point x (optionally, if there are multiple corresponding recommended resources, time point x is a position of the first recommended resource).

For example, a time interval between x and Y2_max satisfies a preset relationship, that is, $x - Y2\_max </\leq$ delta, where delta is a value prescribed/configured/preconfigured by a protocol, or delta is determined based on at least one or more (a sum there of) of N1, ..., and N3 (or the corresponding maximum/minimum values).

(4) The UE determines a resource selection window: n + (Z1, Z2)/[Z1, Z2].

The resource selection trigger time point is n, Z 1 is determined in the same manner as X1/Y1, and Z2 is determined in the same manner as X2/Y2.

In addition, as a supplement to Example 1, during resource selection in the window, the resource selection may be performed based on the number of sub-channels of the "recommended resource". However, the first several (/first) resource(s) are used for transporting the resource recommendation signaling and can constrain that the 'resource recommendation signaling' is transported using only one sub-channel.

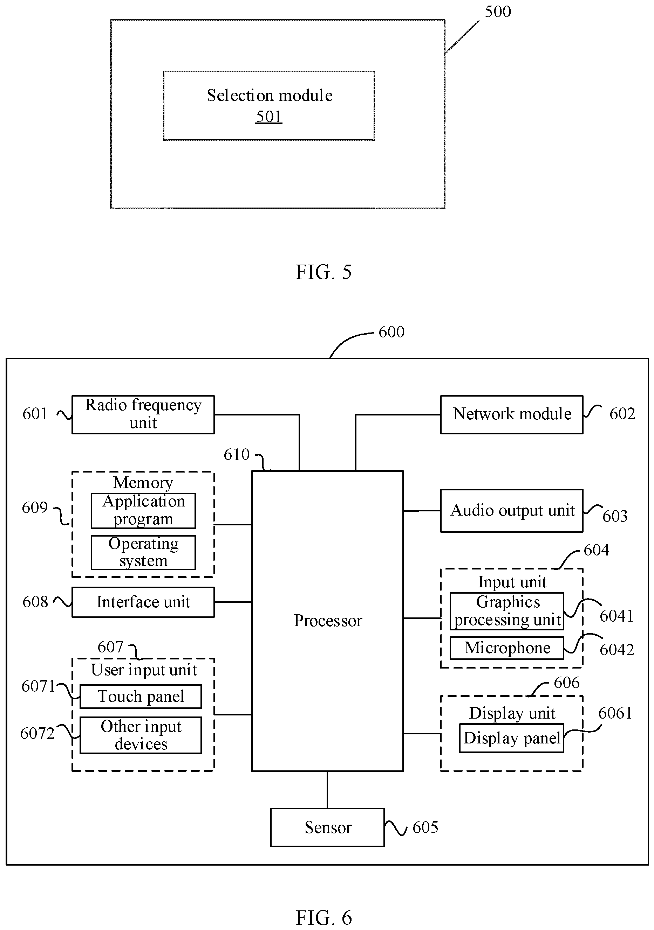

Referring to FIG. 5, an embodiment of this disclosure provides a sidelink resource recommendation apparatus applied to a first terminal, where the apparatus 500 includes:

a selection module 501 configured to select a sidelink resource, the sidelink resource including one or more of the following: a first resource and a second resource; where

the first resource is for the first terminal to recommend to a second terminal; and

the second resource is used for the first terminal to transmit first information to the second terminal, where the first information is used for the first terminal to recommend the first resource to the second terminal.

In an implementation of this disclosure, the apparatus 500 further includes:

a first receiving module configured to receive second information, where the second information is used to trigger the first terminal to select the sidelink resource, or the second information is used to trigger the first terminal to recommend the first resource to the second terminal.

In an implementation of this disclosure, the apparatus 500 further includes:

a first transmitting module configured to transmit the first information to the second terminal by using the second resource.

In an implementation of this disclosure, a selection module 501 is further configured for the first terminal to select the sidelink resource from a third resource, where the third resource is a resource with interference lower than a threshold.

In an implementation of this disclosure, the apparatus 500 further includes:

a determining module configured to determine the third resource.

In an implementation of this disclosure, the determining module is further configured to determine the third resource in a first resource selection window.

In an implementation of this disclosure, the determining module is further configured for the first terminal to determine the third resource in the first resource selection window based on protocol-prescribed information, control node-configured information, or preconfigured information.

In an implementation of this disclosure, the selection module 501 is further configured to: determine a second resource selection window; and select the sidelink resource from the third resource in the second resource selection window.

In an implementation of this disclosure, the selection module 501 is further configured for the first terminal to select the sidelink resource based on one or more of a first time, a PDB, priority information, the number of sub-channels, and the number of repetitions; where

the first time is a trigger time for selecting the sidelink resource by the first terminal.

In an implementation of this disclosure, the selection module 501 is further configured to select the sidelink resource based on a second time; where

the second time includes at least one or more of the following:

> a processing time for second information;
> a processing time for selection of the first resource;
> a transport preparation time for the first information;
> a transport time for the first information;
> a demodulation time for the first information; and
> a transport preparation time for the second terminal.

In an implementation of this disclosure, the determining module is further configured to determine the third resource based on one or more of a third time, a packet delay budget, priority information, the number of sub-channels, and the number of repetitions; where

the third time is a trigger time for selecting the sidelink resource by the first terminal.

In an implementation of this disclosure, the determining module is further configured to determine the third resource based on a fourth time; where

the fourth time includes one or more of the following:

> a processing time for second information;
> a processing time for selection of the first resource;
> a transport preparation time for the first information;
> a transport time for the first information;
> a demodulation time for the first information; and
> a transport preparation time for the second terminal.

In an implementation of this disclosure, the packet delay budget is a packet delay budget prescribed by a protocol, configured or preconfigured by a control node, dynamically indicated by a control node, negotiated between terminals, or pertaining to a TB to be transported by the second terminal;

or

> the priority information is priority information prescribed by a protocol, configured or preconfigured by a control node, dynamically indicated by a control node, negotiated between terminals, or pertaining to a TB to be transported by the second terminal;
> or
> the number of sub-channels is the number of sub-channels prescribed by a protocol, configured or preconfigured by a control node, dynamically indicated by a control node, negotiated between terminals, or pertaining to a TB to be transported by the second terminal;

or

the number of repetitions is the number of repetitions prescribed by a protocol, configured or preconfigured by a control node, dynamically indicated by a control node, negotiated between terminals, or pertaining to a TB to be transported by the second terminal.

In an implementation of this disclosure, a priority of the first information is further used for priority comparison between transmission or reception of the first information and another transport; where the another transport includes at least one of new radio NR sidelink SL transmission, NR SL reception, NR uplink UL transmission, evolved universal terrestrial radio access EUTRA SL transmission, and EUTRA SL reception.

In an implementation of this disclosure, the selection module 501 is further configured to select the sidelink resource based on a resource selection mechanism; where

the resource selection mechanism includes one or more of the following:

> a first mechanism, where the first mechanism includes that a first resource selection procedure is used for the first resource and that a second resource selection procedure is used for the second resource; and
> a second mechanism, where the second mechanism includes that a third resource selection window is used for the first resource and that a fourth resource selection window is used for the second resource.

In an implementation of this disclosure, the resource selection mechanism is prescribed by a protocol, or configured or preconfigured by a control node.

In an implementation of this disclosure, the first resource selection procedure and the second resource selection procedure are executed separately; or

the first resource selection procedure and the second resource selection procedure share one resource selection procedure.

In an implementation of this disclosure, that the first resource selection procedure and the second resource selection procedure are executed separately includes at least one or more of the following:

> the second resource selection procedure is triggered based on a position of the first resource selected in the first resource selection procedure;
> the first resource selection procedure is triggered based on a position of the second resource selected in the second resource selection procedure;

the second resource is selected based on the position of the first resource selected in the first resource selection procedure; and

the first resource is selected based on the position of the second resource selected in the second resource selection procedure.

In an implementation of this disclosure, the apparatus 500 further includes a processing module configured to:

in a case that selection of the first resource fails in the first resource selection procedure, terminate the first resource selection procedure or discard a selected resource;

or

in a case that selection of the second resource fails in the second resource selection procedure, terminate the second resource selection procedure or discard a selected resource.

In an implementation of this disclosure, the third resource selection window and the fourth resource selection window are prescribed by a protocol, or configured or preconfigured by a control node.

In an implementation of this disclosure, the third resource selection window and the fourth resource selection window satisfy one of the following:

the third resource selection window and the fourth resource selection window are different resource selection windows; or

the third resource selection window and the fourth resource selection window share one resource selection window.

In an implementation of this disclosure, that the third resource selection window and the fourth resource selection window are different resource selection windows includes:

the fourth resource selection window is determined based on a position of the first resource selected in the third resource selection window, or the third resource selection window is determined based on a position of the second resource selected in the fourth resource selection window.

In an implementation of this disclosure, a time interval between the first resource and the second resource is determined based on one or more of the following:

a sum of a transport time for the first information and a time for demodulating the first information by the second terminal;

a sum of the transport time for the first information and a transport preparation time for the second terminal;

a sum of the transport time for the first information, the time for demodulating the first information by the second terminal, and the transport preparation time for the second terminal;

protocol prescription, control node configuration or preconfiguration, or negotiation between terminals; and

the first information being capable of indicating the first resource.

In an implementation of this disclosure, the first information includes one or more of the following:

position(s) of one or more start sub-channels;

one or more TDRA fields or FDRA fields, each TDRA field or FDRA field corresponding to a position of one start sub-channel;

position(s) of one or more start slots;

a time interval between the first information and the start slot;

a time interval between multiple start slots;

an absolute time of the start slot;

a reference SFN of the start slot; and

a time offset of the start slot.

The apparatus provided in this embodiment of this disclosure can implement the processes implemented in the method embodiments of FIG. 2 to FIG. 4 with the same technical effects achieved. To avoid repetition, details are not described herein again.

An embodiment of this disclosure further provides a terminal including a processor and a communication interface. The processor is configured to select a sidelink resource. The sidelink resource includes one or more of the following: a first resource and a second resource. The first resource is for the first terminal to recommend to a second terminal. The second resource is used for the first terminal to transmit first information to the second terminal. The first information is used for the first terminal to recommend the first resource to the second terminal. This terminal embodiment corresponds to the foregoing method embodiments on the terminal side, and the implementation processes and implementation manners described in the foregoing method embodiments are applicable to this terminal embodiment, with the same technical effects achieved.

Specifically, FIG. 6 is a schematic diagram of a hardware structure of a terminal according to an embodiment of this disclosure. The terminal 600 includes but is not limited to at least a part of components such as a radio frequency unit 601, a network module 602, an audio output unit 603, an input unit 604, a sensor 605, a display unit 606, a user input unit 607, an interface unit 608, a memory 609, and a processor 610.

Those skilled in the art can understand that the terminal 600 may further include a power supply (for example, battery) that supplies power to the components. The power supply may be logically connected to the processor 610 via a power management system, so that functions such as charge and discharge management and power consumption management are implemented via the power management system. The structure of the terminal shown in FIG. 6 does not constitute any limitation on the terminal, and the terminal may include more or fewer components than shown in the figure, or combine some of the components, or have different arrangements of the components. Details are not described herein.

It should be understood that in this embodiment of this disclosure, the input unit 604 may include a graphics processing unit (Graphics Processing Unit, GPU) 6041 and a microphone 6042. The graphics processing unit 6041 processes image data of a static picture or a video that is obtained by an image capture apparatus (for example, a camera) in a video capture mode or an image capture mode. The display unit 606 may include a display panel 6061. The display panel 6061 may be configured in a form of a liquid crystal display, an organic light-emitting diode display, or the like. The user input unit 607 includes a touch panel 6071 and other input devices 6072. The touch panel 6071 is also referred to as a touchscreen. The touch panel 6071 may include two parts: a touch detection apparatus and a touch controller. The other input devices 6072 may include but are not limited to a physical keyboard, a functional button (such as a volume control button or a power on/off button), a trackball, a mouse, and a joystick. Details are not described herein.

In this embodiment of this disclosure, the radio frequency unit 601 transmits downlink data received from a network-side device to the processor 610 for processing, and in addition, transmits uplink data to the network-side device. Generally, the radio frequency unit 601 includes but is not limited to an antenna, at least one amplifier, a transceiver, a coupler, a low noise amplifier, a duplexer, and the like.

The memory 609 may be configured to store software programs or instructions and various data. The memory 609 may include a program or instruction storage area and a data storage area. The program or instruction storage area may store an operating system, an application program or instruction required by at least one function (for example, a sound playback function or an image playback function), and the like. In addition, the memory 609 may include a high-speed random access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, flash memory device, or other volatile solid-state storage device.

The processor 610 may include one or more processing units. Optionally, the processor 610 may integrate an application processor and a modem processor. The application processor mainly processes an operating system, a user interface, application programs or instructions, and the like. The modem processor mainly processes wireless communication, for example, being a baseband processor. It can be understood that the modem processor may alternatively be not integrated in the processor 610.

The terminal provided in this embodiment of this disclosure can implement the processes implemented in the method embodiments of FIG. 2 to FIG. 4 with the same technical effects achieved. To avoid repetition, details are not described herein again.

An embodiment of this disclosure further provides a computer program/program product, where the computer program/program product is stored in a storage medium, and the computer program/program product is executed by at least one processor so as to implement the steps of the processing method in FIG. 2 to FIG. 4.

An embodiment of this disclosure further provides a readable storage medium, where the readable storage medium stores a program or instructions, and when the program or instructions are executed by a processor, the processes of the foregoing method embodiments of FIG. 2 to FIG. 4 are implemented, with the same technical effects achieved. To avoid repetition, details are not described herein again.

The processor is a processor in the terminal described in the foregoing embodiment. The readable storage medium includes a computer-readable storage medium, for example, a computer read-only memory (Read-Only Memory, ROM), a random access memory (Random Access Memory, RAM), a magnetic disk, or an optical disc.

An embodiment of this disclosure further provides a chip, where the chip includes a processor and a communication interface, the communication interface is coupled to the processor, and the processor is configured to run a program or instructions so as to implement the processes of the method embodiments shown in FIG. 2 to FIG. 4, with the same technical effects achieved. To avoid repetition, details are not described herein again.

It should be understood that the chip mentioned in this embodiment of this disclosure may also be referred to as a system-level chip, a system chip, a chip system, a system-on-chip, or the like.

An embodiment of this disclosure further provides a chip configured to execute the processes of the foregoing method embodiments shown in FIG. 2 to FIG. 4, with the same technical effects achieved. To avoid repetition, details are not described herein again.

It should be noted that the terms "include", "comprise", or any of their variants are intended to cover a non-exclusive inclusion, such that a process, method, article, or apparatus that includes a series of elements includes not only those elements but also other elements that are not expressly listed, or further includes elements inherent to such process, method, article, or apparatus. Without more restrictions, an element preceded by the statement "includes a... " does not preclude the presence of other identical elements in the process, method, article, or apparatus that includes the element. In addition, it should be noted that the scope of the method and apparatus in the implementations of this disclosure is not limited to functions being performed in the order shown or discussed, but may further include functions being performed at substantially the same time or in a reverse order, depending on the functions involved. For example, the described method may be performed in an order different from the order described, and steps may be added, omitted, or combined. In addition, features described with reference to some examples may be combined in other examples.

By means of the foregoing description of the implementations, persons skilled in the art may clearly understand that the method in the foregoing embodiments may be implemented by software with a necessary general hardware platform. Certainly, the method in the foregoing embodiments may also be implemented by hardware. However, in many cases, the former is a preferred implementation. Based on such an understanding, the technical solutions of this disclosure essentially or the part contributing to the related art may be implemented in the form of a computer program product. The computer program product is stored in a storage medium (for example, ROM/RAM, a magnetic disk, or an optical disc), and includes several instructions for instructing a terminal (which may be a mobile phone, a computer, a server, an air conditioner, a network device, or the like) to perform the method described in the embodiments of this disclosure.

The embodiments of this disclosure are described above with reference to the accompanying drawings, but this disclosure is not limited to the foregoing implementations. The foregoing implementations are only illustrative rather than restrictive. Inspired by this disclosure, a person of ordinary skill in the art can still derive many variations without departing from the essence of this disclosure and the protection scope of the claims. All these variations shall fall within the protection of this disclosure.

**Claims**

1. A sidelink resource recommendation method, comprising:

    selecting, by a first terminal, a sidelink resource, the sidelink resource comprising one or more of the following: a first resource and a second resource; wherein
    the first resource is for the first terminal to recommend to a second terminal; and
    the second resource is used for the first terminal to transmit first information to the second terminal, wherein the first information is used for the first terminal to recommend the first resource to the second terminal.

2. The method according to claim 1, wherein the method further comprises:
    receiving, by the first terminal, second information, wherein the second information is used to trigger the first terminal to select the sidelink resource, or the second information is used to trigger the first terminal to recommend the first resource to the second terminal.

3. The method according to claim 1, wherein the method further comprises:
    transmitting, by the first terminal, the first information to the second terminal by using the second resource.

4. The method according to claim 1 or 2, wherein the step of selecting, by a first terminal, a sidelink resource comprises:
    selecting, by the first terminal, the sidelink resource from a third resource, wherein the third resource is a resource with interference lower than a threshold.

5. The method according to claim 4, wherein before the step of selecting, by the first terminal, the sidelink resource from a third resource, the method further comprises:
    determining, by the first terminal, the third resource.

6. The method according to claim 5, wherein the step of determining, by the first terminal, the third resource comprises:
    determining, by the first terminal, the third resource in a first resource selection window.

7. The method according to claim 6, wherein the step of determining, by the first terminal, the third resource in a first resource selection window comprises:
    determining, by the first terminal, the third resource in the first resource selection window based on protocol-prescribed information, control node-configured information, or preconfigured information.

8. The method according to claim 4, wherein the step of selecting, by the first terminal, the sidelink resource from a third resource comprises:

    determining, by the first terminal, a second resource selection window; and
    selecting, by the first terminal, the sidelink resource from the third resource in the second resource selection window.

9. The method according to claim 1, wherein the step of selecting, by a first terminal, a sidelink resource comprises:

selecting, by the first terminal, the sidelink resource based on one or more of a first time, a packet delay budget PDB, priority information, the number of sub-channels, and the number of repetitions; wherein
the first time is a trigger time for selecting the sidelink resource by the first terminal.

10. The method according to claim 1, wherein the step of selecting, by a first terminal, a sidelink resource comprises:

   selecting, by the first terminal, the sidelink resource based on a second time; wherein
   the second time comprises at least one or more of the following:

      a processing time for second information;
      a processing time for selection of the first resource;
      a transport preparation time for the first information;
      a transport time for the first information;
      a demodulation time for the first information; and
      a transport preparation time for the second terminal.

11. The method according to claim 5, wherein the step of determining, by the first terminal, the third resource comprises:

   determining, by the first terminal, the third resource based on one or more of a third time, a packet delay budget, priority information, the number of sub-channels, and the number of repetitions; wherein
   the third time is a trigger time for selecting the sidelink resource by the first terminal.

12. The method according to claim 5, wherein the step of determining, by the first terminal, the third resource comprises:

   determining, by the first terminal, the third resource based on a fourth time; wherein
   the fourth time comprises one or more of the following:

      a processing time for second information;
      a processing time for selection of the first resource;
      a transport preparation time for the first information;
      a transport time for the first information;
      a demodulation time for the first information; and
      a transport preparation time for the second terminal.

13. The method according to claim 9 or 11, wherein

   the packet delay budget is a packet delay budget prescribed by a protocol, configured or preconfigured by a control node, dynamically indicated by a control node, negotiated between terminals, or pertaining to a TB to be transported by the second terminal;
   or
   the priority information is priority information prescribed by a protocol, configured or preconfigured by a control node, dynamically indicated by a control node, negotiated between terminals, or pertaining to a TB to be transported by the second terminal;
   or
   the number of sub-channels is the number of sub-channels prescribed by a protocol, configured or preconfigured by a control node, dynamically indicated by a control node, negotiated between terminals, or pertaining to a TB to be transported by the second terminal;
   or
   the number of repetitions is the number of repetitions prescribed by a protocol, configured or preconfigured by a control node, dynamically indicated by a control node, negotiated between terminals, or pertaining to a TB to be transported by the second terminal.

14. The method according to claim 1, wherein a priority of the first information is further used for priority comparison between transmission or reception of the first information or transmission or reception of feedback information corresponding to the first information and another transport; wherein the another transport comprises at least one of new radio NR sidelink SL transmission, NR SL reception, NR uplink UL transmission, evolved universal terrestrial radio access EUTRA SL transmission, and EUTRA SL reception.

15. The method according to claim 1, wherein the step of selecting, by a first terminal, a sidelink resource comprises:

   selecting, by the first terminal, the sidelink resource based on a resource selection mechanism; wherein
   the resource selection mechanism comprises one or more of the following:

      a first mechanism, wherein the first mechanism comprises that a first resource selection procedure is used for the first resource and that a second resource selection procedure is used for the second resource; and

a second mechanism, wherein the second mechanism comprises that a third resource selection window is used for the first resource and that a fourth resource selection window is used for the second resource.

16. The method according to claim 15, wherein the resource selection mechanism is prescribed by a protocol, or configured or preconfigured by a control node.

17. The method according to claim 15, wherein

the first resource selection procedure and the second resource selection procedure are executed separately; or
the first resource selection procedure and the second resource selection procedure share one resource selection procedure.

18. The method according to claim 17, wherein that the first resource selection procedure and the second resource selection procedure are executed separately comprises at least one or more of the following:

the second resource selection procedure is triggered based on a position of the first resource selected in the first resource selection procedure;
the first resource selection procedure is triggered based on a position of the second resource selected in the second resource selection procedure;
the second resource is selected based on the position of the first resource selected in the first resource selection procedure; and
the first resource is selected based on the position of the second resource selected in the second resource selection procedure.

19. The method according to claim 15, wherein the method further comprises:

in a case that selection of the first resource fails in the first resource selection procedure, terminating, by the first terminal, the first resource selection procedure, or discarding a selected resource;
or
in a case that selection of the second resource fails in the second resource selection procedure, terminating, by the first terminal, the second resource selection procedure, or discarding a selected resource.

20. The method according to claim 15, wherein the third resource selection window and the fourth resource selection window are prescribed by a protocol, or configured or preconfigured by a control node.

21. The method according to claim 15, wherein the third resource selection window and the fourth resource selection window satisfy one of the following:

the third resource selection window and the fourth resource selection window are different resource selection windows; or
the third resource selection window and the fourth resource selection window share one resource selection window.

22. The method according to claim 21, wherein that the third resource selection window and the fourth resource selection window are different resource selection windows comprises:
the fourth resource selection window is determined based on a position of the first resource selected in the third resource selection window, or the third resource selection window is determined based on a position of the second resource selected in the fourth resource selection window.

23. The method according to claim 1, wherein a time interval between the first resource and the second resource is determined based on one or more of the following:

a sum of a transport time for the first information and a time for demodulating the first information by the second terminal;
a sum of the transport time for the first information and a transport preparation time for the second terminal;
a sum of the transport time for the first information, the time for demodulating the first information by the second terminal, and the transport preparation time for the second terminal;
protocol prescription, control node configuration or preconfiguration, or negotiation between terminals; and
the first information being capable of indicating the first resource.

24. The method according to claim 1, wherein the first information comprises one or more of the following:

position(s) of one or more start sub-channels;
one or more TDRA fields or FDRA fields, each TDRA field or FDRA field corresponding to a position of one start sub-channel;
position(s) of one or more start slots;
a time interval between the first information and the start slot;
a time interval between multiple start slots;
an absolute time of the start slot;
a reference SFN of the start slot; and

a time offset of the start slot.

**25.** A sidelink resource recommendation apparatus, applied to a first terminal and comprising:

a selection module configured to select a sidelink resource, the sidelink resource comprising one or more of the following: a first resource and a second resource; wherein
the first resource is for the first terminal to recommend to a second terminal; and
the second resource is used for the first terminal to transmit first information to the second terminal, wherein the first information is used for the first terminal to recommend the first resource to the second terminal.

**26.** A terminal, comprising a processor, a memory, and a program stored in the memory and capable of running on the processor, wherein when the program is executed by the processor, the steps of the method according to any one of claims 1 to 24 are implemented.

**27.** A readable storage medium, wherein the readable storage medium stores a program or instructions, and when the program or instructions are executed by a processor, the steps of the method according to any one of claims 1 to 24 are implemented.

**28.** A chip, comprising a processor and a communication interface, wherein the communication interface is coupled to the processor, and the processor is configured to run a program or instructions so as to implement the steps of the sidelink resource recommendation method according to any one of claims 1 to 24.

**29.** A computer program product, wherein the program product is stored in a storage medium, and the program product is executed by at least one processor so as to implement the steps of the sidelink resource recommendation method according to any one of claims 1 to 24.

**30.** A communication device, configured to perform the steps of the sidelink resource recommendation method according to any one of claims 1 to 24.

FIG. 1

A first terminal selects a sidelink resource, the sidelink resource including one or more of the following: a first resource and a second resource; where the second resource is used for the first terminal to transmit first information to a second terminal, where the first information is used for the first terminal to recommend the first resource to the second terminal

201

FIG. 2

202

A first terminal receives second information, where the second information is used to trigger the first terminal to select a sidelink resource, or the second information is used to trigger the first terminal to recommend a first resource to a second terminal

201

The first terminal selects a sidelink resource, the sidelink resource including one or more of the following: a first resource and a second resource; where the second resource is used for the first terminal to transmit the first information to the second terminal, where the first information is used for the first terminal to recommend the first resource to the second terminal

FIG. 3

201

A first terminal selects a sidelink resource, the sidelink resource including one or more of the following: a first resource and a second resource; where the second resource is used for the first terminal to transmit first information to a second terminal, where the first information is used for the first terminal to recommend the first resource to the second terminal

203

The first terminal transmits the first information to the second terminal by using the second resource

FIG. 4

500

Selection module
501

FIG. 5

600

601 — Radio frequency unit

Network module — 602

610

Memory
609 — Application program

Operating system

Interface unit 608

607
User input unit
6071 — Touch panel

6072 — Other input devices

Processor

Audio output unit — 603

604
Input unit
Graphics processing unit — 6041

Microphone — 6042

606
Display unit — 6061
Display panel

Sensor — 605

FIG. 6

## INTERNATIONAL SEARCH REPORT

| International application No. |
| --- |
| **PCT/CN2022/084509** |

**A. CLASSIFICATION OF SUBJECT MATTER**

H04B 17/327(2015.01)i; H04W 72/04(2009.01)i

According to International Patent Classification (IPC) or to both national classification and IPC

**B. FIELDS SEARCHED**

Minimum documentation searched (classification system followed by classification symbols)

H04B; H04W

Documentation searched other than minimum documentation to the extent that such documents are included in the fields searched

Electronic data base consulted during the international search (name of data base and, where practicable, search terms used)

CNABS; CNTXT; CNKI; WPABS; ENTXT; 3GPP: 旁链, 侧链, 副链, 边链, V2X, D2D, 推荐, 分配, 调度, 资源, sidelink, recommend+, assign+, schedul+

**C. DOCUMENTS CONSIDERED TO BE RELEVANT**

| Category* | Citation of document, with indication, where appropriate, of the relevant passages | Relevant to claim No. |
| --- | --- | --- |
| X | WO 2020060276 A1 (LG ELECTRONICS INC.) 26 March 2020 (2020-03-26) description, paragraphs 146-294, and figure 16 | 1-30 |
| X | WO 2020124501 A1 (LENOVO BEIJING LTD.) 25 June 2020 (2020-06-25) description, paragraphs 38-102 | 1-30 |
| A | CN 111436121 A (HUAWEI TECHNOLOGIES CO., LTD.) 21 July 2020 (2020-07-21) entire document | 1-30 |
| A | CN 111278126 A (VIVO COMMUNICATION TECHNOLOGY CO., LTD.) 12 June 2020 (2020-06-12) entire document | 1-30 |
| A | US 2020146044 A1 (MAAREF, A. et al.) 07 May 2020 (2020-05-07) entire document | 1-30 |
| A | WO 2020142995 A1 (BEIJING XIAOMI MOBILE SOFTWARE CO., LTD.) 16 July 2020 (2020-07-16) entire document | 1-30 |

☐ Further documents are listed in the continuation of Box C.  ☑ See patent family annex.

| * Special categories of cited documents: | |
| --- | --- |
| "A" document defining the general state of the art which is not considered to be of particular relevance | "T" later document published after the international filing date or priority date and not in conflict with the application but cited to understand the principle or theory underlying the invention |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **23 May 2022** | **30 May 2022** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/084509**

| Patent document cited in search report | | | Publication date (day/month/year) | Patent family member(s) | | | Publication date (day/month/year) |
|---|---|---|---|---|---|---|---|
| WO | 2020060276 | A1 | 26 March 2020 | US | 2021352628 | A1 | 11 November 2021 |
| WO | 2020124501 | A1 | 25 June 2020 | EP | 3900235 | A1 | 27 October 2021 |
| | | | | US | 2021345396 | A1 | 04 November 2021 |
| CN | 111436121 | A | 21 July 2020 | EP | 3902353 | A1 | 27 October 2021 |
| | | | | WO | 2020143804 | A1 | 16 July 2020 |
| | | | | US | 2021337515 | A1 | 28 October 2021 |
| CN | 111278126 | A | 12 June 2020 | WO | 2020200203 | A1 | 08 October 2020 |
| | | | | US | 2022022170 | A1 | 20 January 2022 |
| | | | | EP | 3952532 | A1 | 09 February 2022 |
| | | | | KR | 20210146398 | A | 03 December 2021 |
| | | | | SG | 11202110862 W | A | 28 October 2021 |
| US | 2020146044 | A1 | 07 May 2020 | EP | 3864914 | A1 | 18 August 2021 |
| | | | | CN | 112970309 | A | 15 June 2021 |
| | | | | WO | 2020088665 | A1 | 07 May 2020 |
| WO | 2020142995 | A1 | 16 July 2020 | CN | 109845373 | A | 04 June 2019 |
| | | | | EP | 3908065 | A1 | 10 November 2021 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110357794